**Europäisches Patentamt**

**European Patent Office**

**Office européen des brevets**

(11) Veröffentlichungsnummer: **0 171 607**
**A1**

## (12) EUROPÄISCHE PATENTANMELDUNG

(21) Anmeldenummer: **85108650.4**

(22) Anmeldetag: **11.07.85**

(51) Int. Cl.⁴: **F 26 B 3/08**
**F 26 B 11/08, B 01 J 8/24**

(30) Priorität: **16.08.84 DE 3430127**

(43) Veröffentlichungstag der Anmeldung:
**19.02.86 Patentblatt 86/8**

(84) Benannte Vertragsstaaten:
**AT BE CH FR GB IT LI NL SE**

(71) Anmelder: **Krauss-Maffei Aktiengesellschaft**
**Krauss-Maffei-Strasse 2**
**D-8000 München 50(DE)**

(72) Erfinder: **Alstetter, Franz, Dipl.-Ing.**
**Augustenfelderweg 1B**
**D-8047 Karlsfeld(DE)**

(72) Erfinder: **Schiele, Herbert, Dipl.-Ing.**
**Rathausstrasse 36**
**D-8047 Karlsfeld(DE)**

(72) Erfinder: **Sedlmayer, Peter**
**Willibaldstrasse 154**
**D-8000 München 21(DE)**

(72) Erfinder: **Hultsch, Günther**
**Am Stichgartl 1**
**D-8042 Oberschleissheim(DE)**

(54) Vorrichtung und Verfahren zum Trocknen von insbesondere feinkörnigen Feststoffpartikeln.

(57) Um bei einer Vorrichtung und einem Verfahren zur Wärme- und Stoffübertragung zwischen feinkörnigen Feststoffpartikeln und einem Trägergasstrom in einer rotierenden Wirbelschicht zu vermeiden, daß sich Grobpartikel oder Agglomerate am Boden der Wirbelschicht absetzen, werden Rührelemente vorgeschlagen, die in die Wirbelschicht eintauchen und mit einer zur Geschwindigkeit der umlaufenden Wirbelschicht unterschiedlichen Geschwindigkeit bewegt werden.

EP 0 171 607 A1

./...

*Fig. 1*

K r a u s s - M a f f e i
Aktiengesellschaft
8000 München 50                          TT 437a


- 1 -


## Vorrichtung und Verfahren zum Trocknen von insbesondere feinkörnigen Feststoffpartikeln


Die Erfindung bezieht sich auf ein Verfahren und eine Vorrichtung zum Trocknen von insbesondere feinkörnigen Feststoffpartikeln in einer Wirbelschicht nach dem Oberbegriff des Anspruchs 1.

Aus der DE-PS 19 10 003 oder der DE-AS 26 22 565 sind Zentrifugal-Fließbettrockner bzw. Wirbelschichttrockner dieser Art bekannt, bei denen die im zentrifugalen Fließbett in der Schwebe zu haltenden Feststoffpartikel von oben oder von unten in die Siebtrommel eingeführt werden.

Um sicherzustellen, daß sämtliche der zugeführten Feststoffpartikel in der das Fließbett bildenden Wirbelschicht durch den Trägergasstrom in der Schwebe gehalten werden, muß eine geeignete Korngrößenverteilung vorliegen. Damit läßt sich verhindern, daß maßgebliche Anteile der Feststoffpartikel auf der Siebtrommelfläche liegen bleiben oder mit dem Trägergasstrom radial nach innen aus der Wirbelschicht ausgetragen werden.

Diese Bedingung liegt jedoch einer technischen Aufgabenstellung nur selten zugrunde und kann mit vertretbarem Aufwand meist nicht beeinflußt werden.

So neigen zahlreiche Feuchtprodukte, die in einer Wirbelschicht getrocknet werden sollen, zur Agglomeration. Die Agglomerate verhalten sich dann wie Grobpartikel und werden aufgrund ihrer ungünstigen Fluidisierbarkeit vom Gasstrom nicht mehr in der Wirbelschicht gehalten und sedimentieren auf der Siebtrommelfläche, wo sie allmählich einen Belag bilden, der die Öffnungen der Siebtrommel zusetzen kann und den kontinuierlichen Prozeßablauf zum Erliegen bringen kann.

Ein weiterer, einen ordnungsgemäßen Prozeßablauf störender oder verhindernder Effekt tritt bei sehr feinkörnigen Produkten auf, wenn zu trockenes Feuchtprodukt in die Siebtrommel eingeführt wird. Verursacht durch starke interpartikuläre Haftkräfte, die von den Strömungskräften im Erdschwerefeld nicht überwunden werden können, kommt es zur sogenannten Kanalbildung, durch die das Trägerstromgas wirkungslos hindurchtritt, ohne die Feststoffpartikel in diesem Bereich zu fluidisieren.

Der Erfindung liegt die Aufgabe zugrunde, die durch Agglomerierung von Feststoffpartikeln verursachte Störung der Fluidisierung des Fließbettes zu beseitigen oder weitestgehend zu mindern.

Gelöst wird diese Aufgabe durch die im Anspruch 1 angegebene Maßnahme. Diese bewirkt, daß zu gröberen Teilen agglomerierte Feststoffpartikel im Bereich der Wirbelschicht mechanisch verkleinert werden und somit eine Partikelgröße erhalten, mit der sie im Trägergasstrom in der Schwebe gehalten werden können.

Ein besonderer Vorteil ergibt sich bei nicht zerteilbaren Agglomeraten oder Grobpartikeln, die aufgrund ihrer für eine Wirbelschichtbildung ungeeigneten Größe radial nach außen absinken würden und sich auf der Siebmantel-Innenfläche festsetzen würden. Derartige Agglomerate und Grobpartikel werden erfindungsgemäß von den Rührelementen erfaßt und auf mechanischem Wege aus der umlaufenden Wirbelschicht zusammen mit den übrigen Feinpartikeln ausgetragen. Sie können durch Sichten und Sieben von den behandelten Feinpartikeln getrennt, in einem nachgeordneten Bearbeitungsgang zerkleinert und der Wirbelschicht erneut wieder zugeführt werden.

Eine Vorrichtung zur Durchführung dieses Verfahrensschrittes gibt Anspruch 2 an. Nach Anspruch 3 wird die Anordnung der Rührelemente angegeben, die sich je nach Bedarf über die gesamte oder nur einen Teil der axialen Länge des Siebtrommelmantels erstrecken können, wobei die Rührelemente zweckmäßigerweise an in das Innere der Siebtrommel ragenden Haltearmen befestigt sind.

In einer bevorzugten Ausführungsform, die eine technisch einfache Lösung darstellt, sind die Haltearme ortsfest am Siebtrommelgehäuse befestigt, so daß die Winkelgeschwindigkeit der in das Wirbelbett eintauchenden Rührelemente gleich Null sind.

In einer anderen Ausführungsform sind die Haltearme drehbar am Siebtrommelgehäuse angeordnet, so daß eine beliebige Differenzdrehzahl zwischen Siebtrommel und Rührelementen einstellbar ist. Hiermit ist die Rührvorrichtung unterschiedlichen Betriebsbedingungen und Materialbeschaffenheiten beliebig anpaßbar.

Für Betriebsfälle, die eine besonders starke Verwirbelung der zu Agglomeraten neigenden Feststoffpartikeln erfordern ist es zweckmäßig, an den Haltearmen Drehantriebe vorzusehen, mit denen die in das Fließbett eintauchenden Rührelemente im wesentlichen senkrecht der Drehachse der Siebtrommel antreibbar sind.

Zweckmäßigerweise sind die Rührelemente aus die Form einer Platte aufweisenden Schaufeln gebildet, die in senkrecht zur Drehachse der Siebtrommeln verlaufenden Ebenen an den Haltearmen angeordnet sind. Bei einer guten Rühr- und Zerkleinerungswirkung für Agglomerate verursachen diese Schaufeln nur einen geringen Strömungswiderstand. Die angegebene Wirkung kann noch durch die Ausbildung der Schaufelvorderkante als Schneide gesteigert werden. Die Schaufeln sind vorteilhafterweise an den Haltearmen verschwenkbar angeordnet, so daß, beispielsweise bei gleichem Winkelausschlag sämtlicher auf einem Haltearm gelagerter Schaufeln, der Fließbettströmung eine axial gerichtete Transportkomponente mitgeteilt werden kann, oder daß, beispielsweise bei entgegengesetzt gerichteten Winkelanschlägen zweier benachbarter Schaufeln, ein gesteigerter Verwirbelungseffekt erzielt werden kann.

In einer vorteilhaften Ausführungsform sind die Schaufeln nach Art einer Pflugschar gewölbt, so daß sich neben der Zerteilung von Agglomeraten durch die pflugscharartige Schneide der Schaufel noch eine Umschichtungswirkung einstellt, durch die radial weiter außen liegende Fließbettschichten in radial innere Fließbettschichten gefördert werden.

Zur Erzielung eines in radialer Richtung der Siebtrommel wirkenden Transporteffekts für zu große Feststoffpartikel oder nicht zerkleinerbare Agglomerate ist der Halteraum schräg zur Drehachse der Siebtrommel angeordnet, so daß die Rührelemente in nachlaufender Stellung angeordnet sind. Die Transportwirkung für die Feststoffteile, die eine zur Fluidisierung ungeeignete Größe haben, stellt sich dabei nach Art eines Gefälles ein.

In einer technisch besonders einfachen Ausführungsform sind die Rührelemente als Stifte ausgebildet.

Einige Ausführungsbeispiele der Erfindung werden nachfolgend anhand der Zeichnung näher erläutert.

Es zeigen in schematischer Darstellung:
Fig. 1 eine erfindungsgemäße Vorrichtung mit zylindrischer Siebtrommel im Längsschnitt,
Fig. 2 einen Haltearm mit starren Schaufeln,
Fig. 3 einen Haltearm mit schwenkbar angeordneten Schaufeln,
Fig. 4 einen schräg zur Drehachse der Siebtrommel angeordneten Haltearm,
Fig. 5 einen Haltearm mit aus Stiften bestehenden Rührelementen in der Seitenaussicht,

Fig. 6 den Haltearm nach Fig. 5 in der Draufsicht,

Fig. 7 einen Haltearm mit pflugscharartigen Rührelementen,

Fig. 8 eine erfindungsgemäße Vorrichtung mit konischer Siebtrommel und umlaufenden Rührelementen und

Fig. 9 eine zylindrische Siebtrommel mit um die
Siebtrommelachse umlaufenden und ihrerseits
um eine eigene Drehachse drehbaren Rührelementen.


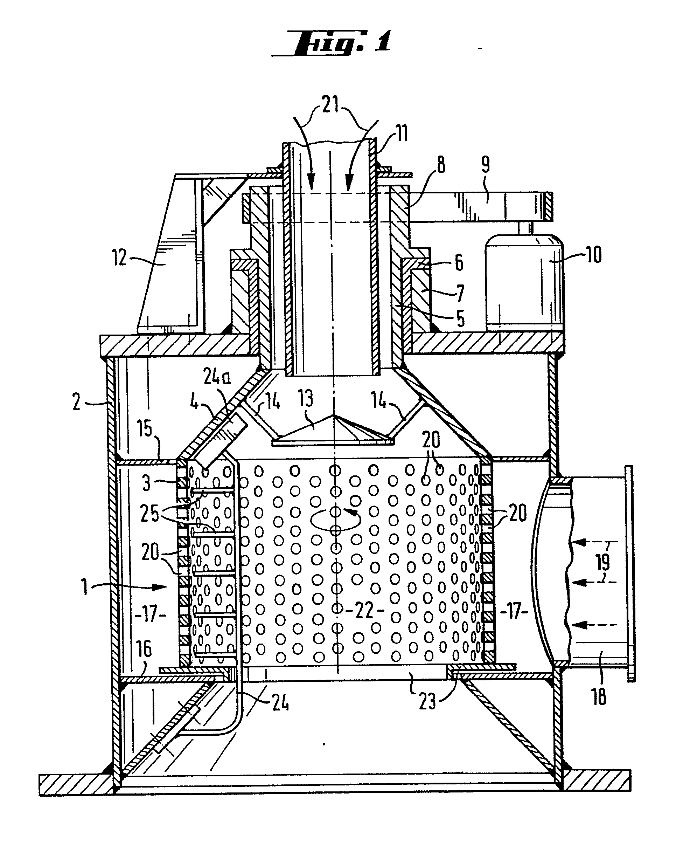

Nach Fig. 1 ist eine nach unten offene Siebtrommel 1
vertikal in einem Trommelgehäuse 2 gelagert. Die Siebtrommel 1 besteht aus einem zylindrischen Siebmantel
3, an den sich ein nach oben verjüngendes Teil 4 anschließt. Letzteres ist mit einer hohlen Trommelachse
5 verbunden, die über eine Gleitlagerbuchse 6 im Lagergehäuse 7 des Trommelgehäuses 2 abgestützt ist.
Im oberen Bereich weist die Trommelachse 5 eine Riemenscheibe 8 auf, die über einen Riemen 9 und einen
am Trommelgehäuse 2 angeordneten Motor 10 antreibbar
ist.


Durch die hohle Trommelachse 5 ist ein Eintragrohr 11
geführt, das über eine Halterung 12 fest mit dem Trommelgehäuse 2 verbunden ist. Unter dem Eintragrohr 11
befindet sich ein Verteilteller 13, der über Stützen
14 an dem nach oben sich verjüngenden Teil 4 der Siebtrommel 1 befestigt ist.


Im Trommelgehäuse 2 ist durch ringförmige Trennwände
15 und 16 ein Trommelraum 17 abgeteilt, durch den
über einen tangential an das Trommelgehäuse 2 herangeführten Stutzen 18 das Trocknungsgas zugeführt wird
(Pfeile 19). Das Trocknungsgas tritt über Bohrungen
20 in die rotierende Siebtrommel 1 ein und bildet mit dem von oben über das Eintragrohr 11 eingegebenen Feststoffpartikeln (Pfeile 21) im Wirbelraum 22 ein von oben nach unten wanderndes Fließbett. Am unteren Ende weist der Siebmantel 3 einen Bordring 23 auf, über den die im Wirbelbett getrockneten Feststoffpartikeln ausgetragen werden.

In die Siebtrommel 3 ragt von unten eine Halterung 24, die ortsfest am Trommelgehäuse 2 befestigt ist und in das Wirbelbett 22 eintauchende Rührelemente in Form von Schaufeln 25 angeordnet hat. An ihrem oberen Ende weist die Halterung 24 einen Schaber 24a auf, der sich in Höhe des Verteilertellers 13 befindet und dem konisch sich verjüngenden Teil 4 der Siebtrommel 3 zugeordnet ist.

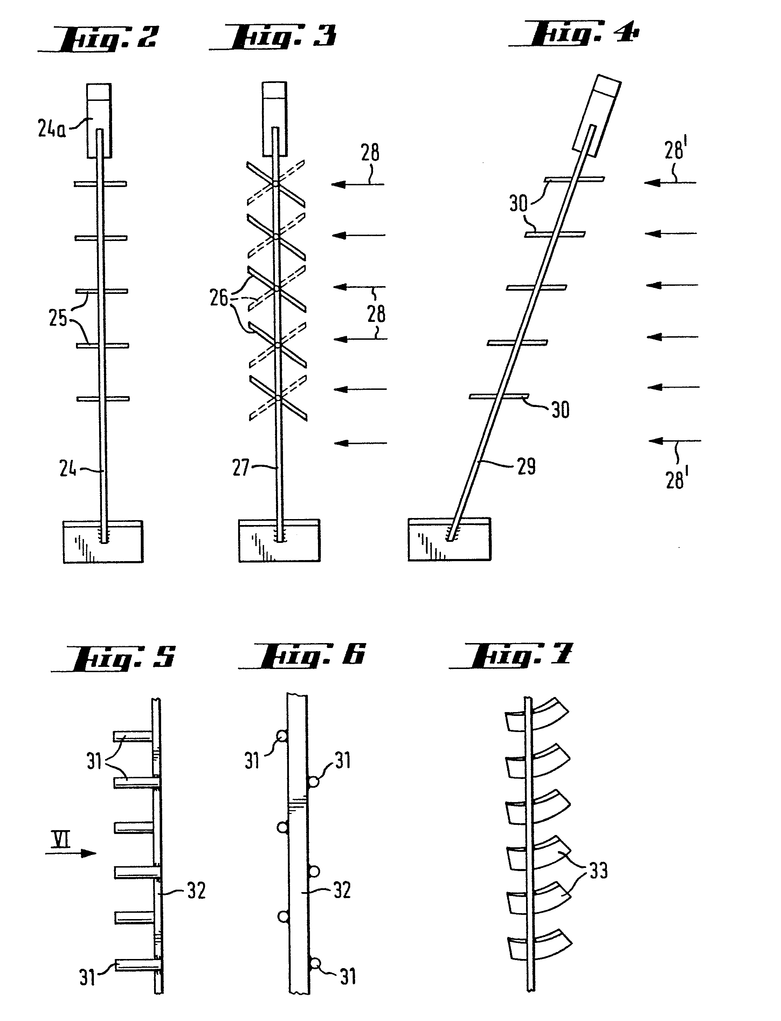

Die Fig. 2 zeigt die Halterung 24 in Einzelstellung mit starr daran befestigten Schaufeln 25.

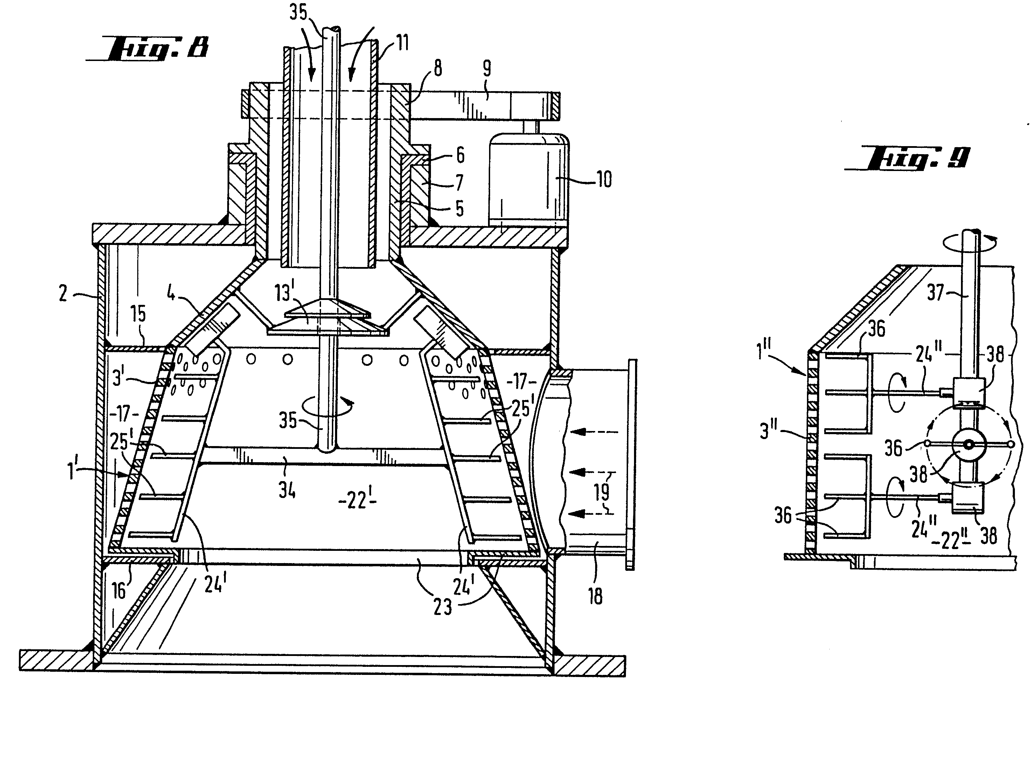

Nach der Ausführungsform nach Fig. 3 sind die Schaufeln 26 schwenkbar am Haltearm 27 angeordnet, wobei die Schaufeln parallel oder jeweils entgegengesetzt gerichtet verschwenkt werden können.

Mit dem parallelen Verschwenken der Schaufeln 26 (Darstellung in Vollinien) gegenüber der Stömungsrichtung (Pfeile 28) des mit der Siebtrommel umlaufenden Wirbelbettes ist eine axiale Strömungskomponente einstellbar, mit der einem vorzeitigen Austrag der Feststoffpartikel aufgrund der Erdbeschleunigung entgegengewirkt werden kann.

Im Gegensatz hierzu kann mit der in unterbrochenen Linien dargestellten Stellung der Schaufeln 26 die durch die Erdbeschleunigung bewirkte Austragskomponente noch unterstützt werden.

Mittels entgegengesetzt gerichteter Schaufeln kann der Verwirbelungseffekt noch gesteigert werden.

Die Fig. 4 zeigt einen gegenüber der Strömungsrichtung (Pfeile 28') der Wirbelschicht schräg angestellten Haltearm 29, der starr und parallel zueinander angeordnete und in Strömungsrichtung (Pfeile 28') ausgerichtete Schaufeln 30 trägt. Die Schaufelvorderkanten sind dadurch stufenförmig gegeneinander versetzt, wodurch zu große Feststoffpartikel oder nicht zerkleinerbare Agglomerate, die nicht zwischen den Schaufeln hindurch kommen, in Richtung des Stufengefälles in Austragrichtung gefördert werden, so daß sie dadurch gesonderten Austrageinrichtungen für übergroße Teile zugeführt werden können.

Die Figuren 5 und 6 zeigen technisch besonders einfach herstellbare Rührelemente in Form von Stiften 31, die an den Haltearm 32 angeschweißt sind.

Nach der Fig. 7 sind die Rührelemente als pflugscharartige Schaufeln 33 ausgebildet, durch deren Wölbung und Verwindung radial äußere Schichten des Wirbelbettes in radial innere Schichten umgewälzt und umgekehrt werden können.

Die Ausführungsform nach Fig. 8 entspricht im wesentlichen der Ausführungsform nach Fig. 1, wobei jedoch der Siebmantel 3' der Siebtrommel 1' kegelstufenförmig ausgebildet ist. Ein weiterer Unterschied ist in den Halterungen 24' gegeben, die über einen Querarm 34 an einer Welle 35 befestigt sind. Die Welle 35 ragt von oben durch das Eintragrohr 11 in den Siebtrommelraum und durchsetzt den Verteilerteller 13'.

Die an den Haltearmen 24' befestigten Schaufeln
25' können mit zur Drehzahl der Siebtrommel 1'
unterschiedlicher Drehzahl angetrieben werden,
so daß eine für einen optimalen Rühreffekt geeignete Relativgeschwindigkeit zwischen der umlaufenden Wirbelschicht 22' und den Rührelementen
einstellbar ist. Grundsätzlich sind derart umlaufende Rührelemente auch an Siebtrommeln mit zylindrischem Siebmantel anwendbar.

Die Fig. 9 zeigt lediglich einen Teilausschnitt
einer Siebtrommel 1'' mit zylindrischem Siebmantel 3'', wobei die Rührelemente in Form von
Stiften 36 auf einer Welle 37 befestigt sind, die
Drehantriebe 38 trägt, mittels der die Rührelemente
eine weitere Drehung erfahren und nach Art eines
Quirls durch das Wirbelbett geführt werden können.
Die Drehantriebe 38 können aus gesonderten, auf der
Welle 37 angeordneten Elektromotoren bestehen, oder
aus Winkelgetrieben, die über eine in der Welle 37
gelagerte Koaxialwelle (nicht dargestellt) antreibbar sind. Die Haltearme 24'' für die Rührelemente
sind dabei als Wellen ausgebildet.

Im Betrieb werden die Feststoffpartikel der Siebtrommel über das gehäusefeste Eintragrohr (Pfeile 21)
zugeführt und über den mit der Siebtrommel mitrotierenden Verteilteller über das konische Teil der
Siebtrommel auf das Innere des Siebmantels gefördert.
Die Feststoffpartikel werden an dieser Stelle durch
das die Öffnungen des Siebmantels radial von außen
nach innen durchdringende Trägergas derart durchströmt, daß sie bei erheblicher Relativgeschwindigkeit zwischen Feststoffpartikeln und Trägergasstrom
in der Schwebe gehalten werden und somit eine Wirbelschicht bzw. ein Fließbett bilden.

Damit sämtliche zugeführte Feststoffpartikel eine Wirbelschicht bilden und weder ein erheblicher Anteil auf der Siebmantelfläche liegen bleibt noch mit dem Gas radial nach innen aus der Wirbelschicht ausgetragen wird, muß eine geeignete Korngrößenverteilung vorliegen, z.B. 80 % zwischen 0,2 und 1,0 mm Partikeldurchmesser. Diese Bedingung liegt jedoch einer technischen Aufgabenstellung selten zugrunde und kann mit vertretbarem Aufwand meist nicht beeinflußt werden, so daß es zur Bildung von Agglomeraten kommt, die sich dann wie Grobpartikel verhalten, die vom Trägergasstrom nicht mehr in der Schwebe gehalten werden können und radial nach außen auf den Siebmantel absinken.

Mit der in die Wirbelschicht eintauchenden Rührelementen, die sich mit einer zur Umlaufgeschwindigkeit des Wirbelbettes unterschiedlichen Geschwindigkeit bewegen, werden Agglomerate zerkleinert und gleichmäßig verteilt. Die Zerkleinerungswirkung kann noch durch geeignete Ausgestaltung der Rührelemente gesteigert werden, wie z.B. die Ausbildung der Vorderkante von Schaufeln als Schneide. Desgleichen läßt sich die Verteilungsfunktion durch pflugscharartige Schaufeln steigern.

Nicht zerteilbare Agglomerate oder Grobpartikel, die radial nach außen absinken würden und sich auf der Siebmantel-Innenfläche absetzen würden, werden auf mechanischem Wege aus der umlaufenden Wirbelschicht ausgetragen und können durch Sichten und Sieben von den behandelten Feinpartikeln getrennt werden. Die ausgesonderten Grobpartikel können dann in einem nachgeordneten Bearbeitungsgang zermahlen und der Wirbelschicht erneut zugeführt werden.

Patentansprüche

1. Verfahren zum Trocknen von insbesondere feinkörnigen Feststoffpartikeln in einer Wirbelschicht, in der die in einer Siebtrommel einem Zentrifugalfeld ausgesetzten Feststoffpartikel durch einen die Öffnungen der Siebtrommel im wesentlichen radial von außen nach innen durchdringenden Trägergasstrom derart durchströmt werden, daß sie bei erheblicher Relativgeschwindigkeit zwischen Feststoffpartikeln und Trägergasstrom in der Schwebe gehalten werden, dadurch gekennzeichnet, daß die Feststoffpartikel in der Wirbelschicht zusätzlich zu der durch die Durchströmung durch den Trägergasstrom gegebenen Verwirbelung mechanisch durchrührt werden.

2. Vorrichtung zur Durchführung des Verfahrens nach Anspruch 1, dadurch gekennzeichnet, daß innerhalb der Siebtrommel (1, 1',1'') in die Wirbelschicht (22, 22', 22'') eintauchende mechanische Rührelemente bzw. Zerkleinerungswerkzeuge angeordnet sind.

3. Vorrichtung nach Anspruch 3, dadurch gekennzeichnet, daß sich die mechanischen Rührelemente über einen Teil oder über die gesamte axiale Länge des Siebmantels (3, 3', 3'') der Siebtrommel (1, 1', 1'') erstrecken.

4. Vorrichtung nach Anspruch 2 oder 3, dadurch gekennzeichnet, daß die Rührelemente an einem oder mehreren in das Innere der Siebtrommel (1, 1', 1'') ragenden Haltearmen (24, 24', 24'') befestigt sind.

5. Vorrichtung nach Anspruch 4, dadurch gekennzeichnet, daß die Haltearme (24) ortsfest mit in dem Siebtrommelgehäuse (2) verbunden sind.

6. Vorrichtung nach Anspruch 4, dadurch gekennzeichnet, daß die Haltearme (24', 24'') drehbar angeordnet sind und mit in Bezug auf die Siebtrommel (1',1'') unterschiedlichen Drehzahl rotieren.

7. Vorrichtung nach einem der Ansprüche 4 bis 6, dadurch gekennzeichnet, daß die Haltearme (24'') Drehantriebe (38) aufweisen, mit denen die in der Wirbelschicht (22'') eingetauchten Rührelemente im wesentlichen senkrecht zur Drehachse der Siebtrommel (1'') antreibbar sind.

8. Vorrichtung nach einem der Ansprüche 2 bis 7, dadurch gekennzeichnet, daß die Rührelemente aus im wesentlichen die Form einer ebenen Platte aufweisenden Schaufeln (25) bestehen, die im wesentlichen in senkrecht zur Drehachse der Siebtrommel (1) verlaufenden Ebenen an den Haltearmen (24) angeordnet sind.

9. Vorrichtung nach einem der Ansprüche 2 bis 8, dadurch gekennzeichnet, daß die Rührelemente an den Haltearmen (27) um im wesentlichen senkrecht zur Drehachse der Siebtrommel (1) angeordnete Schwenkachsen um einen begrenzten Winkelausschlag drehbar sind.

10. Vorrichtung nach Anspruch 9, dadurch gekennzeichnet, daß die Rührelemente parallel zueinander verschwenkbar angeordnet sind.

11. Vorrichtung nach Anspruch 9, dadurch gekennzeichnet, daß die Rührelemente parallel zueinander verschwenkbar angeordnet sind.

12. Vorrichtung nach einem der Ansprüche 8 bis 11, dadurch gekennzeichnet, daß die Schaufeln (25, 26) an ihren, im Fließbett in Umfangsrichtung weisenden Kanten mit Schneiden versehen sind.

13. Vorrichtung nach einem der Ansprüche 8 bis 12, dadurch gekennzeichnet, daß die Schaufeln (33) nach Art einer Pflugschar gewölbt sind.

14. Vorrichtung nach einem der Ansprüche 8 bis 13, dadurch gekennzeichnet, daß die Schaufeln (30) durch schräg zur Drehachse der Siebtrommel (1) angeordnete Haltearme (29) in Bezug auf die in Umlaufrichtung (Pfeile 28') sich bewegende Wirbelschicht (22) in nachlaufender Stellung angeordnet sind.

# Fig. 1

Fig. 2

Fig. 3

Fig. 4

Fig. 5

Fig. 6

Fig. 7

**Fig. 8**

**Fig. 9**

## EINSCHLÄGIGE DOKUMENTE

EP 85108650.4

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| D,Y | DE - B2 - 2 622 565 (KRAUSS-MAFFEI)<br><br>* Spalte 2, Zeile 39 - Spalte 3, Zeile 20; Spalte 4, Zeilen 11-41; Fig. 1 *<br><br>-- | 1 | F 26 B   3/08<br><br>F 26 B  11/08<br><br>B 01 J   8/24 |
| Y | CH - A5 - 613 874 (CPC INTERNATIONAL INC)<br><br>* Zusammenfassung; Seite 3, Zeilen 4-21; Fig. 1 * | 1 |  |
| A | <br>-- | 3,4 |  |
| A | DE - A1 - 3 141 549 (KRAUSS-MAFFEI)<br><br>* Zusammenfassung; Seite 9, Zeile 1 - Seite 10, Zeile 9; Fig. 1,2 *<br><br>-- | 1 |  |
| D,A | DE - B2 - 1 910 003 (FARKAS, LAZAR)<br><br>* Spalte 1, Zeile 55 - Spalte 2, Zeile 38 *<br><br>-- | 1 | RECHERCHIERTE SACHGEBIETE (Int. Cl. 4)<br><br>F 26 B<br><br>B 01 J |
| A | EP - A1 - 0 059 858 (KRAUSS-MAFFEI)<br><br>---- |  |  |

Der vorliegende Recherchenbericht wurde für alle Patentansprüche erstellt.

| Recherchenort | Abschlußdatum der Recherche | Prüfer |
|---|---|---|
| WIEN | 14-11-1985 | HAJOS |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82